# EUROPÄISCHE PATENTANMELDUNG

(11) **EP 3 822 112 A1**
(43) Veröffentlichungstag der Anmeldung: **19.05.2021**
(21) Anmeldenummer: 20202536.7
(22) Anmeldetag: 19.10.2020
(51) Int. Cl.: B60M 7/00, B60M 1/30, B60M 1/36, B60L 50/53, B60L 53/12

(54) **SYSTEM UND LADESCHIENE ZUM LADEN EINES ELEKTROFAHRZEUGS WÄHREND DER FAHRT**

(30) Priorität: 12.11.2019 DE 102019217462
(71) Anmelder: ContiTech Antriebssysteme GmbH, 30165 Hannover (DE)
(72) Erfinder: Freiheit, Philipp, 30419 Hannover (DE); Teves, Reinhard, 30419 Hannover (DE); Fiss, Tim, 30419 Hannover (DE); Rosenbohm, Svenja, 30419 Hannover (DE)
(74) Vertreter: Continental Corporation

(57) **Zusammenfassung**

System zum Laden eines Energiespeichers eines Elektrofahrzeugs während der Fahrt, aufweisend mehrere parallel zur Fahrtrichtung des Elektrofahrzeugs in einer Reihe fortlaufend auf dem oder am Fahrweg angeordnete Energieübertragungseinrichtungen und eine stationär im Fahrzeug angeordnete Energieaufnahmeeinrichtung, wobei die jeweiligen Energieübertragungseinrichtungen untereinander und in Bezug auf die Energieaufnahmeeinrichtung so angeordnet und so schaltbar, betätigbar oder verbindbar sind, dass die Energieübertragungseinrichtungen zur Ladung des Energiespeichers sukzessive in Wechselwirkung mit der Energieaufnahmeeinrichtung treten und die Energieübertragungseinrichtung als längs des Fahrwegs vorgesehene, aneinander anschließende, miteinander geregelt elektrisch verbindbare Ladeschienen aus polymerem Werkstoff, vorzugsweise aus elastomerem Material ausgebildet sind, die einen oder mehrere im elastomeren Material mindestens teilweise eingebettete elektrische Leiter aufweisen.

## Beschreibung

Die Erfindung betrifft ein System zum Laden eines Energiespeichers eines Elektrofahrzeugs während der Fahrt, aufweisend mehrere längs der Fahrtrichtung des Elektrofahrzeugs in einer Reihe fortlaufend auf dem oder am Fahrweg angeordnete Energieübertragungseinrichtungen und eine stationär im Fahrzeug angeordnete Energieaufnahmeeinrichtung, wobei die jeweiligen Energieübertragungseinrichtungen untereinander und in Bezug auf die Energieaufnahmeeinrichtung so angeordnet und so schaltbar oder verbindbar sind, dass die Energieübertragungseinrichtungen zur Ladung des Energiespeichers vorzugsweise sukzessive in Wechselwirkung mit der Energieaufnahmeeinrichtung treten.

Außerdem betrifft die Erfindung eine als Ladeschiene ausgebildete Energieübertragungseinrichtung für das erfindungsgemäße System sowie Verfahren zur Herstellung solcher Ladeschienen.

Elektrofahrzeuge als Ersatz für Fahrzeuge mit Verbrennungsmotoren sind Gegenstand immer größeren Interesses. Der steigende Marktanteil solcher Fahrzeuge wird insbesondere durch die mittlerweile in vielen Ländern festgeschriebenen Maßnahmen und durch internationale Vereinbarungen zur Schonung der Umwelt und zur Reduzierung von CO₂-Emmisionen begünstigt. Die Diskussion um elektrisch angetriebene Fahrzeuge, um nachhaltige und schadstoffarme Mobilität und um Verbesserung der Lebensqualität besonders in Ballungsgebieten erreicht immer breitere Kreise der Bevölkerung.

Bei den Elektrofahrzeugen, die ihre Energie aus einer mitgeführten und teilweise recht schweren Batterie beziehen, besteht der Nachteil, dass diese Batterien, insbesondere diejenigen von schweren Fahrzeugen, in relativ kurzen Abständen nachgeladen werden müssen. Hierzu ist eine Infrastruktur aus bisher nur stationären, d.h. ortsfesten Ladesystemen bzw. Ladesäulen erforderlich, die heutzutage noch längst nicht überall verfügbar ist. Es fehlt darüber hinaus an den erforderlichen verstärkten elektrischen Leitungen zur Stromversorgung einer ausreichenden Anzahl von Ladesäulen in nahezu allen städtischen und ländlichen Bereichen.

Außerdem ist ein ständiges Aufladen der Fahrzeugbatterien an ortsfesten Ladesystemen gerade bei längeren Reisen mit einer häufigen Unterbrechung der Fahrt verbunden, was insgesamt als relativ unkomfortabel empfunden wird. Reichweite und Verfügbarkeit elektrisch angetriebener Fahrzeuge beschreiben also das zentrale Problem eine solchen Mobilitätskonzeptes.

Bereits seit langem bekannt sind demgegenüber Schienensysteme oder Oberleitungssysteme für elektrisch angetriebene Busse oder Lastkraftwagen. Bei solchen Systemen ist das genannte Ladeproblem zwar nicht vorhanden, sie sind aber aus vielerlei Gründen für den Individualverkehr ungeeignet. Der Einsatz und die Akzeptanz von Elektrofahrzeugen im Individualverkehr ist daher in einem erheblichen Maße abhängig von der Verfügbarkeit einer Ladeinfrastruktur.

### Stand der Technik

Im Stand der Technik sind bereits verschiedene Lösungen bekannt, mit deren Hilfe die Problematik der oben beschriebenen fehlenden Ladeinfrastruktur gelöst werden soll. Insbesondere sind hier Systeme offenbart, die eine Art Schienensystem für den Individualverkehr bereitstellen und damit das Problem der Reichweite und die Verfügbarkeit elektrisch angetriebener Fahrzeuge lösen sollen. Mit solchen Schienensystemen soll ein Aufladen von Elektrofahrzeugen während der Fahrt erfolgen können.

Die EP 2 397 360 A1 offenbart hierzu ein Transportsystem auf der Basis von Elektrofahrzeugen, bei dem ein auf der Straße verlegtes Schienensystem stückweise und nur in dem Bereich stromführend geschaltet wird, der von einem stromabnehmenden Fahrzeug passiert bzw. befahren wird. Das Schienensystem weist dafür Einzellängen von Oberschienen und eine hohl ausgebildete lange ("endlose") Grundschiene auf, wobei die jeweilige Oberschiene durch einen vom Fahrzeug aktivierten Elektromagneten in der Grundschiene mit einer Stromzufuhr verbunden und so partiell stromführend geschaltet wird. Ein solches System ist im Aufbau relativ kompliziert und sollte am besten bereits beim Bau einer Straße innerhalb der Fahrbahndecke verlegt werden. Der Aufwand für ein solches System ist also relativ hoch.

Eine Weiterentwicklung, deren Installation weniger kompliziert erscheint, wird durch die in der WO 2016/023705 A1 offenbarte Lösung beschrieben. Das hier vorgeschlagene Schienensystem besteht aus Schienenelementen, welche sowohl die stromführenden Teile als auch den Nullleiter bzw. die Erdung beinhalten. Auch hier sind jeweils mehrere stromführende Teile in Fahrtrichtung hintereinander und voneinander isoliert innerhalb einer oben offenen Vertiefung eines Schienenelements so angeordnet und mit einer Schaltelektronik verbunden, dass nur jeweils die stromführenden Teile in dem Schienenelement aktiviert sind, die gerade von einem Fahrzeug passiert werden. Die Schienenelemente sind dabei so geformt sind, dass sie auf der Fahrbahndecke verlegt und mit einer Stromversorgung verbunden werden können. Ein Einbau innerhalb der Fahrbahndecke ist bei diesem System nicht erforderlich. Nachteilig erscheint es jedoch, dass auch hier relativ starre und lange Einzelschienen vorzugsweise aus Metall verlegt werden müssen.

### Aufgabe der Erfindung

Die Aufgabe der vorliegenden Erfindung bestand demnach in der Bereitstellung eines verbesserten Schienenladesystems, das einfach und in beliebigen Längen unter Nutzung üblicher Verfahren herzustellen ist und das einfach montiert werden kann, ohne größere Arbeiten an der Fahrbahn vorzunehmen. Weiterhin soll das verbesserte Schienenladesystem möglichst wenig Ressourcen zu seiner Herstellung verbrauchen und wenig unterschiedliche Werkstoffe benötigen.

### Lösung der Aufgabe

Gelöst wird diese Aufgabe durch die Merkmale des Hauptanspruchs. Weitere vorteilhafte Ausbildungen sind in den Unteransprüchen offenbart. Darüber hinaus besteht die Lösung nicht nur aus einem Schienensystem, sondern auch aus der Ausbildung der einzelnen zu diesem System gehörigen Ladeschienen gemäß nebengeordnetem Anspruch 4 und in den Verfahren zur Herstellung solcher Ladeschienen nach den Ansprüchen 12, 16 und 18 bis 20. Wie unten im Einzelnen dargestellt, sind das Schienensystem, die speziell dafür ausgebildeten, zugehörigen Ladeschienen und deren Herstellung durch eine einzige erfinderische Idee verbunden, nämlich durch die besondere Ausbildung und Anordnung der Materialien der Ladeschienen, welche sowohl das System und die Herstellung stark prägen und so verbinden.

Dabei sind bei einem System zum Laden eines Energiespeichers eines Elektrofahrzeugs während der Fahrt die Energieübertragungseinrichtungen als längs des Fahrwegs vorgesehene, aneinander anschließende, miteinander geregelt elektrisch verbindbare Ladeschienen aus polymerem Werkstoff, vorzugsweise aus elastomerem Material ausgebildet, die einen oder mehrere im polymeren Werkstoff mindestens teilweise eingebettete elektrische Leiter aufweisen, im Wesentlichen in ihrer Längsrichtung im Polymer eingebettet angeordnete elektrische Leiter.

Insbesondere bei der Ausbildung der Ladeschienen aus thermoplastischem Polyurethan erhält man besonders vorteilhafte Eigenschaften im Hinblick auf eine hohe Verschleiß- und Abriebfestigkeit, eine hohe Zugfestigkeit, eine hohe Weiterreißfestigkeit sowie gute Kälteflexibilität und eine hervorragende Beständigkeit gegenüber aggressiven Medien wie beispielsweise Ozon oder gegen UV Strahlung.

Die Ausbildung eine solchen Ladeschiene aus elastomerem Material, also beispielsweise aus einem polymeren Werkstoff, vorzugsweise einem Elastomer wie etwa Gummi oder aus einem thermoplastischen Polyurethan erlaubt einerseits - natürlich unter entsprechend angepassten Änderungen der Prozesse - die Verwendung von bekannten Herstellungsverfahren und Materialien und führt andererseits dazu, dass das gesamte Schienensystem in höchstem Maße und im wahrsten Sinne des Wortes flexibel ist und sich allen Gegebenheiten einer Straßenführung und -oberfläche anpassen kann.

Die erfindungsgemäßen Ladeschienen aus polymerem Werkstoff bzw. elastomerem Material sind leicht zu transportieren, gegebenenfalls sogar als Rollenware, und können entsprechend einfach verlegt und montiert werden. Solche Ladeschienen können gerade aufgrund ihrer Flexibilität bzw. Gummielastizität problemlos verklebt, geheftet oder im Asphalt von Straßen eingebunden werden. Eine Vereinzelung ist sogar noch auf der Baustelle problemlos möglich.

Ein weiterer großer Vorteil solcher Ladeschienen besteht darin, dass das Grundmaterial der Schiene bereits als Isolator dient und keine besonderen Maßnahmen durchgeführt werden müssen, um die in der Schiene vorhandenen Leiter zu schützen oder zu isolieren. Dadurch reduzieren sich die verwendeten Werkstoffe auf ein Minimum.

Eine vorteilhafte Weiterbildung des Ladesystems besteht darin, dass die als Ladeschiene aus polymerem Werkstoff bzw. elastomerem Material ausgebildete Energieübertragungseinrichtung mindestens teilweise im polymeren Werkstoff bzw. elastomerem Material eingebettete konduktive Leiter und die Energieaufnahmeeinrichtung mit den konduktiven Leitern zusammenwirkende Stromabnehmer aufweisen. Durch eine solche Ausbildung erhält man eine sehr einfache Kontaktierung zwischen Fahrzeug und Schiene, bei der lediglich eine Rolle oder ein Schleifkontakt zur Stromübertragung ausreicht. Natürlich ist es auch leicht möglich, eine sukzessive Bestromung der einzelnen Ladeschienen zu erreichen, das heißt, dass nur jeweils die Ladeschienen aktiviert sind, die gerade von einem Fahrzeug passiert werden.

Eine weitere vorteilhafte Ausbildung besteht darin, dass die als Ladeschiene aus polymerem Werkstoff bzw. elastomerem Material ausgebildete Energieübertragungseinrichtung eine ein Magnetfeld erzeugende erste Spule und die Energieaufnahmeeinrichtung eine zweite induktive Koppelspule zur ersten Spule aufweisen. Durch eine solche induktive Übertragung vermeidet man jeglichen direkten Kontakt zwischen den Leitern und erreicht eine besonders verschleißarme, sichere und störungsfreie Energieübertragung.

Eine in besonderer Weise für die Verwendung in dem erfindungsgemäßen System geeignete Ladeschiene aus polymerem Werkstoff bzw. elastomerem Material ist dadurch gekennzeichnet, dass in der Ladeschiene mindestens drei durch den polymeren Werkstoff bzw. das elastomere Material voneinander isolierte elektrische Leiter vorgesehen sind, von denen mindestens einer als stromführender Leiter, also als Leiter für eine stromführende Phase, mindestens ein zweiter Leiter als Nullleiter und mindestens ein separater dritter, vorzugsweise schaltbarer Leiter vorgesehen, nämlich z.B. ein Leiter, der schaltbar mit einem ersten oder zweiten Leiter verbindbar ist. Man erhält so eine sehr einfach aufgebaute aber für die Zwecke der Ladung völlig ausreichend ausgebildete Ladeschiene, die, wie später noch ausgeführt, im Zusammenhang mit den ebenfalls vorgeschlagenen Herstellungsverfahren auf besonders einfache Weise als Endlosprofil hergestellt und auf der Baustelle konfiguriert werden kann.

Durch eine solche Anordnung von Leitern in der Ladeschiene, nämlich durch die Anordnung eines schaltbaren und mit dem ersten oder zweiten Leiter verbindbaren Leiters ist es möglich, nur immer einzelne Abschnitte mit der durch alle Ladeschienen laufenden Phase, d.h. mit dem Strom führendem Leiter zu verbinden. Durch eine entsprechende Steuerung oder Regelung geschieht dies dann nur an den Stellen oder Bereichen, an denen die Ladeschiene gerade durch das Fahrzeug kontaktiert wird. Damit schaltet man Gefahren durch Stromkontakt für andere Verkehrsteilnehmer aus. Nachdem das Fahrzeug aus dem Bereich herausgefahren ist, kann dann der Kontakt zur stromführenden Schiene unterbrochen und der schaltbaren Leiter geerdet werden.

Natürlich können auch noch weitere Leiter innerhalb der Ladeschiene angeordnet werden, beispielsweise Leitungen für Signale oder Sensoren, die für die Regelung oder Steuerung des Systems gebraucht werden.

Eine vorteilhafte Weiterbildung der elastomeren Ladeschiene besteht darin, dass der stromführende Leiter und der Nullleiter in Bezug auf den Querschnitt der Ladeschiene in deren Seitenbereichen und der schaltbare Leiter zwischen stromführendem Leiter und Nullleiter angeordnet sind. Durch eine solche Geometrie erhält man eine besonders flache Schiene, die insbesondere auf ebenen Straßenoberflächen sehr leicht aufgebracht werden kann und kaum auffällt. Dies gilt insbesondere in der Zusammenwirkung mit einer weiteren vorteilhaften Ausbildung, die darin besteht, dass die Ladeschiene einen flachen, bandförmigen Querschnitt aufweist, wobei die Höhe der Ladeschiene kleiner als 15% ihrer Breite ist, vorzugsweise kleiner als 10% ihrer Breite.

Eine vorteilhafte Alternative besteht darin, dass die Ladeschiene einen flachen, trapezförmigen Querschnitt aufweist, wobei der schalbare Leiter im Bereich der kürzeren der beiden parallelen Seiten angeordnet und die längere der beiden parallelen Seiten dem Fahrweg zugewandt ist, wobei die Höhe des Trapezes kleiner als 10% der Länge der kürzeren der beiden parallelen Seiten ist. Durch eine solche Formgebung ergibt sich eine sichere Auflage auf der Oberfläche des Fahrweges bzw. der Straße und die trapezförmige Ausbildung mit ihren beidseitigen "Auffahrrampen" sorgt dafür, dass auch ein seitliches Auffahren auf oder ein Hin- und Herfahren der Schiene ohne weiteres möglich und für den Fahrer kaum merkbar ist.

Eine weitere vorteilhafte Ausbildung besteht darin, dass mindestens zwei Leiter in Bezug auf den Querschnitt der Ladeschiene übereinander angeordnet sind. Bei relativ flachen und breiten Leiterquerschnitten, also etwa folienartig ausgebildeten Leitern, kann man dann sehr schmale Ladeschienen herstellen, die für bestimmte Anwendungsfälle auf engen Straßen durchaus vorteilhaft sind.

Eine weitere vorteilhafte Ausbildung der elastomeren Ladeschiene besteht darin, dass der schaltbare Leiter an einer Oberfläche der Ladeschiene nur teilweise und so eingebettet ist, dass der schaltbare Leiter konduktiv kontaktierbar ist, vorzugsweise durch einen auf der Ladeschiene gleitenden oder rollenden Stromabnehmer. Dies erleichtert, wie oben bereits dargestellt, die konduktive Stromzufuhr mithilfe von Rollen oder Stromabnehmern.

Eine weitere vorteilhafte Ausbildung der elastomeren Ladeschiene besteht darin, dass die Unterseite oder die längere der beiden parallelen Seiten dem Fahrweg zugewandte Ausnehmungen oder Kanäle, beispielsweise zur Abfuhr von Schmutz oder Wasser aufweist. Bei geneigten Straßenoberflächen vermeidet man auf diese Weise sehr leicht, dass sich seitlich der Ladeschiene Wasser aufstaut, das zu einem gefährlichen "Aquaplaning" für Fahrzeuge führen könnte, insbesondere für zweirädrige Fahrzeuge.

Eine weitere vorteilhafte Ausbildung der elastomeren Ladeschiene besteht darin, dass innerhalb der Matrix aus elastomerem Material ein weiteres konduktives Material eingebettet wird, dass von den übrigen Leitern elektrisch isoliert ist. Ein solches zusätzliches konduktives Material kann beispielsweise zur Ableitung statischer Aufladungen/ zur Erdung erforderlich werden und/oder auch zur Signalübertragung von einer Ladeschiene zur anderen.

Als eines der in besonderer Weise für die elastomeren Ladeschienen geeigneten Herstellungsverfahren ist ein einstufiges Extrusions- und Formverfahren vorgesehen, bei dem ein polymerer Werkstoff, vorzugsweise ein Elastomer oder ein thermoplastisches Polyurethan in einem Extrusionsprozess ggf. unter zusätzlicher Wärmezufuhr plastifiziert und durch eine den Austrittquerschnitt aus einem Extruderkopf bildende Extruderdüse gefördert wird, wobei ein flacher Streifen extrudierten Materials geformt wird.

Dabei sind erfindungsgemäß die folgenden weiteren Verfahrensschritte erforderlich:
a) mindestens ein Stromleiter und mindestens ein Nullleiter werden über Abstandhalter voneinander beabstandet rückseitig der Extruderdüse so zugeführt, dass abhängig von der Vorschubgeschwindigkeit der Leiter und der Austrittsgeschwindigkeit und -menge des aus der Extruderdüse austretenden plastifizierten polymeren Werkstoffs die mindestens zwei Leiter in das extrudierte, noch warme relativ zähflüssige Material eingebunden, vollständig umhüllt und damit elektrisch isoliert werden,
b) auf die so in Form eines flachen Materialstreifens entstandene Verbundstruktur aus extrudiertem polymerem Werkstoffs mit eingebetteten Leitern wird mindestens ein separater dritter konduktiver Leiter so aufgebracht, dass der dritte Leiter von den ersten und dem zweiten Leiter elektrisch isoliert ist und an einer Oberfläche des Materialstreifens nur teilweise eingebettet ist,
c) die so entstandene Verbundstruktur aus extrudiertem, noch zähflüssigem Polymer mit eingebetteten Leitern wird in einem Formspalt zwischen einem Druckband und einem mit einem Außenprofil versehenen Formrad unter Wärmeentzug zum fertigen Ladeschienenrohling eingeformt und vulkanisiert,
wobei nach Durchlaufen des Formspaltes zwischen Druckband und Formrad der endlose Ladeschienenrohling in einzelne Ladeschienenlängen geschnitten wird.

Das so ausgebildete Herstellungsverfahren lehnt sich an bisher bekannte Verfahren an und kann daher ohne weiteres in bestehenden Produktionsanlagen integriert werden. Darüber hinaus führt dieses Verfahren zu einer besonders einfachen kontinuierlichen Herstellung von endlosen Längen, die entweder sofort nach der Herstellung vereinzelt werden oder aber danach leicht gelagert, transportiert, und später in einzelne Längen geschnitten werden können.

Eine vorteilhafte Weiterbildung dieses Verfahren der Herstellung von Ladeschienen durch ein einstufiges Extrusions- und Formverfahren besteht darin, dass im Schritt d) nach Durchlaufen des Formspaltes zwischen Druckband und Formrad und vor dem Schnitt der endlose Ladeschienenrohling einer weiteren Wärmebehandlung zur Vulkanisation oder Vernetzung des polymeren Werkstoffs zugeführt wird. Beispielsweise kann der Ladeschienenrohling hier durch einen Heizkanal geführt werden, der - je nach vorheriger Prozessführung - eine vollständige Vulkanisation oder Vernetzung erreichen lässt.

Eine weitere vorteilhafte Ausbildung dieses Verfahren besteht darin, dass im Schritt b) auf die Verbundstruktur aus flachem Materialstreifen extrudierten Polymers mit eingebetteten Leitern ein weiteres konduktives Material in die Polymermatrix eingebettet wird, wobei das weitere konduktive Material zur Verbesserung der Haftung vorzugsweise erwärmt wird. Auf diese Weise lässt sich auch ein weiterer Leiter oder ein weiteres konduktives Material durch das Extrusionsverfahren einbringen, welches gegebenenfalls zur Ableitung von statischer Aufladung oder für die Erdung erforderlich wird.

Eine weitere vorteilhafte Ausbildung dieses Verfahren besteht darin, dass im Schritt a) und/oder b) mindestens zwei der konduktiven Leiter übereinander geführt und übereinander beabstandet in die Verbundstruktur aus extrudiertem polymerem Werkstoff eingebettet werden. Auf diese Weise wird eine einfache Herstellung der oben bereits beschriebenen schmaleren Ladeschienen erreicht.

Als weiteres in besonderer Weise für die elastomeren Ladeschienen geeignetes Herstellungsverfahren ist ein mehrstufiges Extrusions- und Formverfahren vorgesehen, bei dem ein Polymer, vorzugsweise ein Elastomer oder ein thermoplastisches Polyurethan in Extrusionsprozessen plastifiziert und durch eine den Austrittquerschnitt aus einem Extruderkopf bildende Extruderdüse gefördert wird, wobei ein flacher Streifen extrudierten Materials geformt wird.

Dabei sind die folgenden weiteren Verfahrensschritte wesentlich:
a) mindestens ein erster Leiter, vorzugsweise der schaltbare, separate Leiter wird rückseitig einer ersten Extruderdüse so zugeführt, dass abhängig von der Vorschubgeschwindigkeit des Leiters und der Austrittsgeschwindigkeit und - menge des aus der Extruderdüse austretenden plastifizierten polymeren Werkstoffs der Leiter so aufgebracht wird, dass er in einer Oberfläche des Materialstreifens nur teilweise in das extrudierte Polymer eingebettet ist,
b) die so entstandene erste Verbundstruktur aus extrudiertem, noch zähflüssigem polymerem Werkstoff mit eingebetteten Leitern wird in einen Formspalt zwischen einem Druckband und einem Formrad eingeführt, wobei vor Eintritt in den Formspalt mindestens ein zweiter Leiter, vorzugsweise der stromführende Leiter, der Verbundstruktur zugeführt und mit letzterer im Formspalt zu einem Teilrohling verbunden wird, wobei erster Leiter und zweiter Leiter durch das Polymer voneinander isoliert sind,
c) nach Durchlaufen des Formspaltes zwischen Druckband und Formrad wird der so entstandene erste Teilrohling und mindestens ein dritter Leiter, vorzugsweise der Nullleiter, rückseitig einer zweiten Extruderdüse für plastifizierten polymeren Werkstoff zugeführt, wobei das plastifizierte Polymer den dritten Leiter vollständig umhüllt und elektrisch von allen übrigen Leitern isoliert,
d) die so entstandene zweite Verbundstruktur aus extrudiertem, noch zähflüssigem polymeren Werkstoff mit allen eingebetteten Leitern wird in einen zweiten Formspalt zwischen einem Druckband und einem zweiten Formrad eingeführt,
e) nach Durchlaufen des zweiten Formspalts zwischen Druckband und zweitem Formrad wird der so entstandene zweite Teilrohling rückseitig einer dritten Extruderdüse für plastifiziertes Polymer zugeführt, wobei das plastifizierte Polymer auf die dem ersten Leiter gegenüberliegende Seite des zweiten Teilrohlings aufgebracht wird,
f) die so entstandene dritte Verbundstruktur aus extrudiertem, noch zähflüssigem polymerem Werkstoff mit allen eingebetteten Leitern wird in einen dritten Formspalt zwischen einem Druckband und einem mit einem Außenprofil versehenen Formrad zum fertigen Ladeschienenrohling eingeführt und eingeformt,
g) nach Durchlaufen des dritten Formspaltes wird der endlose Ladeschienenrohling in einzelne Ladeschienenlängen geschnitten.

Der Vorteil einer solchen mehrstufigen Extrusion besteht darin, dass die Ausbildung der Geometrie und die Anordnung der einzelnen Leiter innerhalb der Ladeschiene mit wesentlich größerem Gestaltungsspielraum und mit viel mehr Freiheitsgraden möglich ist, auch wenn das Verfahren natürlich an sich komplizierter und aufwändiger ist, als die einstufige Extrusion. Hier ist dann aufgrund der entsprechenden Anforderungen zwischen den entsprechenden vorgeschlagenen Herstellungsverfahren auszuwählen, wobei insgesamt festzuhalten ist, dass die Extrusionsverfahren im Vergleich zu den bisherigen Herstellungsverfahren im Stand der Technik erheblich Vorteile beinhalten und mehr Anpassungen auf die jeweilige Anwendung ermöglichen.

Natürlich kann auch bei der hier dargestellten mehrstufigen Extrusion in einem der Schritte a) bis f) auf die jeweilige Verbundstruktur ein weiteres konduktives Material in die Polymermatrix eingebettet werden, wobei das weitere konduktive Material vorzugsweise erwärmt wird. Die Vorteile sind hier dieselben wie die bei der einstufigen Extrusion beschriebenen.

Die Druckbänder sowohl bei der einstufigen Extrusion als auch bei der mehrstufigen Extrusion umschlingen die jeweiligen Formräder unter Druck über einen Umschlingungswinkel von ca. 200°.

Als weiteres in besonderer Weise für die elastomeren Ladeschienen geeignetes Herstellungsverfahren kommen eine Herstellung nach Anspruch 18 in Betracht, bei dem mehrere kalandrierte oder konfektionierte Bahnen eines mindestens noch teilweise plastifizierten polymeren Werkstoffs, vorzugsweise eines Elastomers oder eines thermoplastischen Polyurethans (Rollenware) in den Formspalt zwischen einem Band und einem zylindrischen, heizbaren, vorzugsweise profilierten Formrad einer Rotationsvulkanisationseinrichtung eingeführt werden, wobei Temperaturführung des Formrades und Anlagedruck des Bandes so ausgebildet sind, das bei mindestens teilweiser Vulkanisation der Bahnen ein endloses Verbundmaterial als Ladeschienenrohling geformt wird.

Ebenso ist ein Herstellungsverfahren geeignet, bei dem mehrere kalandrierte und im Wesentlichen in der Länge einer Ladeschiene konfektionierte Bahnen eines mindestens teilweise plastifizierten Polymers, vorzugsweise eines Elastomer oder ein thermoplastischen Polyurethans in eine als Vulkanisationsform ausgebildete Vulkanisationspresse eingelegt werden, wobei Temperaturführung des Vulkanisationspresse und Pressendruck so ausgebildet sind, dass bei der Vulkanisation der Bahnen ein die Ladeschiene bildendes Verbundmaterial geformt wird.

Die letztgenannte Verfahren bietet ähnliche Vorteile in Bezug auf die Verarbeitung von elastomeren Material wie die Herstellung mit einer Rotationsvulkanisationseinrichtung, ist aber nicht dazu geeignet, kontinuierlich in Endloslängen zu fertigen. Dafür ist es ein sehr preiswertes Herstellverfahren für einzelne Längen, kleine Mengen und für Reparaturbedarf.

Letztlich ist ein weiteres Verfahren in besonderer Weise für die Herstellung elastomerer Ladeschienen geeignet, bei dem mehrere Leitermaterialien als Strang, Draht, Litzen oder Bahnmaterial in eine vorzugsweise heizbare Spritzgussform oder Spritzgussvorrichtung eingelegt oder eingeführt werden, wonach die Leitermaterialien mit einem plastifizierten Polymer, vorzugsweise einem Elastomer oder einem thermoplastischen Polyurethan so umspritzt werden, dass der polymere Werkstoff die Leiter umhüllt und elektrisch voneinander isoliert, wobei das Polymer anschließend in der Spritzgussform oder - vorrichtung vernetzt oder vulkanisiert wird und Temperaturführung und Druck in der Spritzgussform oder Spritzgussvorrichtung so ausgebildet sind, dass ein Verbundmaterial geformt wird, welches den Ladeschienenrohling oder die Ladeschiene bildet und letztlich geschnitten, getrimmt und/oder einer Endenbearbeitung zugeführt wird.

Der Vorteil bei diesem Verfahren besteht darin, dass sowohl eine Endlosfertigung als auch - je nach Ausbildung der Spritzgussform oder -vorrichtung - ein kontinuierliches oder auch ein stückweises Herstellen von Ladeschienen ermöglicht wird.

### Ausführungsbeispiel

Anhand eines Ausführungsbeispiels soll die Erfindung näher erläutert werden. Es zeigen
- Fig. 1: Prinzipskizzen dreier verschiedener Ausführungen der erfindungsgemäßen elastomeren Ladeschiene (Fig. 1a, Fig. 1b, Fig. 1c)
- Fig. 2: eine erfindungsgemäße Ladeschiene im Längsschnitt
- Fig. 3: in Form einer Prinzipskizze ein erfindungsgemäßes einstufiges Extrusions- und Formverfahren zur Herstellung von Ladeschienen
- Fig. 4: eine Prinzipskizze ein weiteres erfindungsgemäßes Herstellungsverfahren, nämlich eines mehrstufigen Extrusions- und Formverfahrens
- Fig. 5: eine Prinzipskizze eines weiteren erfindungsgemäßen Verfahrens zur Herstellung von Ladeschienen mit Hilfe einer Rotationsvulkanisationseinrichtung,
- Fig. 6: eine Prinzipskizze eines Systems zum Laden eines Energiespeichers eines Elektrofahrzeugs während der Fahrt.

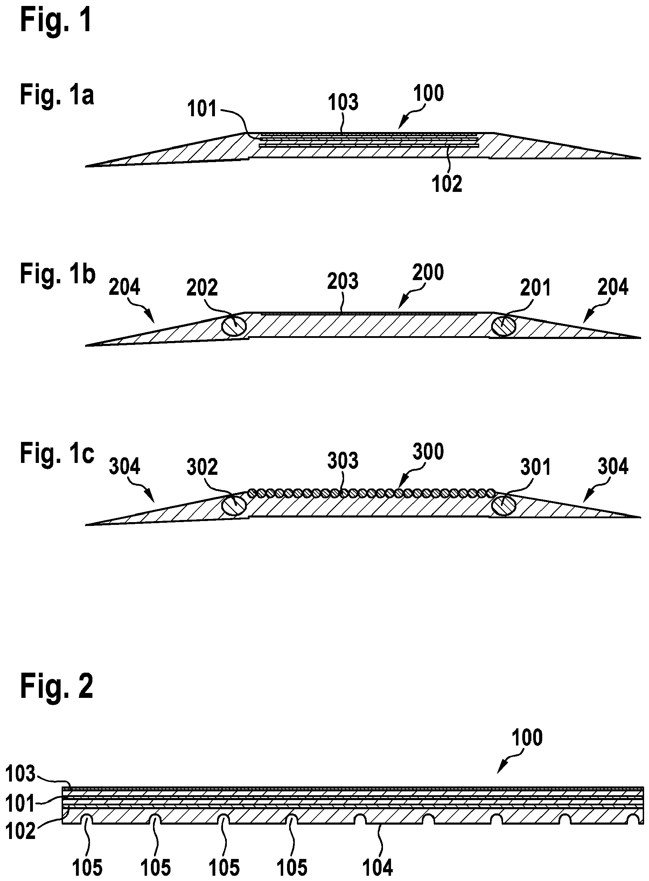

Die Fig. 1 zeigt in Form von Prinzipskizzen drei verschiedene Ausführungen einer erfindungsgemäßen aus polymerem Werkstoff bestehende Ladeschiene eines Systems zum Laden eines Energiespeichers eines Elektrofahrzeugs im Querschnitt, nämlich in der Fig 1a eine Ladeschiene 100, bei der ein stromführende Leiter 101, ein Nullleiter 102 sowie ein schaltbare Leiter 103 in Bezug auf den Querschnitt der Ladeschiene 100 übereinander angeordnet und als flache Folienleiter ausgebildet sind.

In Fig.lb und Fig.lc sind Ladeschienen 200 und 300 im Querschnitt dargestellt. Bei beiden Ladeschienen sind stromführende Leiter 201 und 301 in Bezug auf den Querschnitt der Ladeschienen 200 und 300 in deren Seitenbereichen 204 und 304 angeordnet.

Die Ladeschienen 200 und 300 weisen jeweils Nullleiter 202 und 302 sowie schaltbare Leiter 203 und 303 zwischen den stromführendem Leitern 201 und 301 und den Nullleitern 202 und 302 auf. In Fig. 1b ist der schaltbare Leiter 203 dabei als flacher Folienleiter ausgebildet, bei der Ausführung in Fig. 1c ist der schaltbare Leiter 303 dabei als Leiterbündel ausgebildet.

Die Ladeschienen 100, 200 und 300 bestehen aus einem thermoplastischen Polyurethan und sind mit flachem, trapezförmigem Querschnitt ausgebildet, wobei die schalbaren Leiter 103, 203 und 303 im Bereich der kürzeren der beiden parallelen Seiten angeordnet und die längere der beiden parallelen Seiten als untere und dem Fahrweg zugewandte Seite vorgesehen ist. Die Höhe des Trapezes ist kleiner als 10% der Länge der kürzeren der beiden parallelen Seiten.

Fig. 2 zeigt die Ladeschiene 100 im Längsschnitt. Erkennbar sind hier wieder die als flache Folienleiter ausgebildeten Leiter 101, 102 und 103 sowie auf der Unterseite 104 ausgebildeten und quer zur Längsrichtung der Ladeschiene ausgerichteten Ausnehmungen 105, die zur Abfuhr von Wasser oder Schmutz vorgesehen sind

Bei allen in den Fig. 1a bis 1c dargestellten Ausführungen von Ladeschienen sind die schaltbaren Leiter 103, 203 und 303 an einer Oberfläche der jeweiligen Ladeschiene nur teilweise und so eingebettet, dass die Leiter von der Oberseite der Ladeschienen konduktiv kontaktierbar sind, beispielsweise durch einen gleitenden oder rollenden Stromabnehmer.

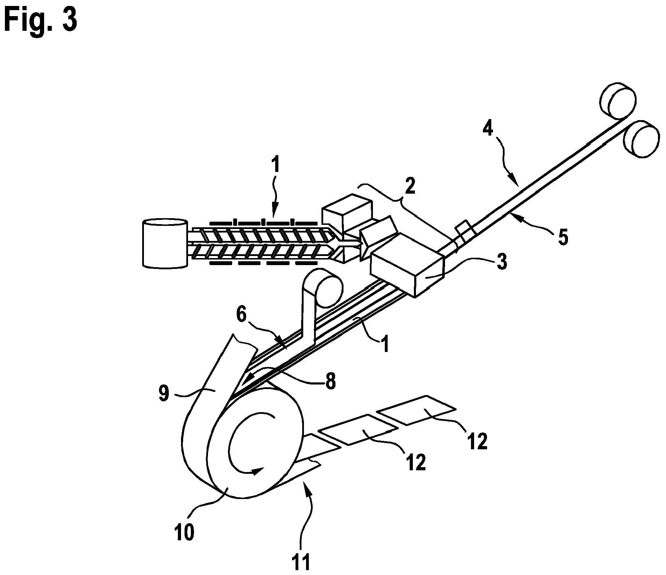

Fig. 3 zeigt in Form einer Prinzipskizze ein erfindungsgemäßes Herstellungsverfahren, nämlich ein Extrusions- und Formverfahren, bei dem ein Polymer 1, hier ein thermoplastisches Polyurethan, in einem Extrusionsprozess plastifiziert und durch eine den Austrittquerschnitt aus einem Extruderkopf 2 bildende Extruderdüse 3 gefördert wird, wobei ein flacher Streifen extrudierten Polymers 1 geformt wird bzw. austritt.

Nun werden ein stromführender Leiter 4 und mindestens ein Nullleiter 5 über Abstandhalter voneinander beabstandet rückseitig der Extruderdüse 3 so zugeführt, dass abhängig von der Vorschubgeschwindigkeit der Leiter 4 und 5 und der Austrittsgeschwindigkeit und -menge des aus der Extruderdüse 3 austretenden plastifizierten Polymers 1 die mindestens zwei Leiter in das extrudierte, noch warme relativ zähflüssige Material eingebunden, vollständig umhüllt und damit elektrisch isoliert werden.

Auf die so in Form eines flachen Materialstreifens entstandene Verbundstruktur aus extrudiertem Polymer 1 mit eingebetteten Leitern 4 und 5 wird mindestens ein separater, konduktiver dritter Leiter 6 so aufgebracht, dass der dritte Leiter von dem ersten und zweiten Leiter elektrisch isoliert ist und an einer Oberfläche des Materialstreifens nur teilweise eingebettet ist.

Die so entstandene Verbundstruktur 7 aus extrudiertem, noch zähflüssigem Polymer 1 mit eingebetteten Leitern 4, 5 und 6 wird dann in einem Formspalt 8 zwischen einem Druckband 9 und einem mit einem Außenprofil versehenen Formrad 10 unter Wärmeentzug zum fertigen Ladeschienenrohling 11 eingeformt und vulkanisiert. nach Durchlaufen des Formspaltes zwischen Druckband und Formrad wird der endlose Ladeschienenrohling in einzelne Ladeschienenlängen 12 geschnitten.

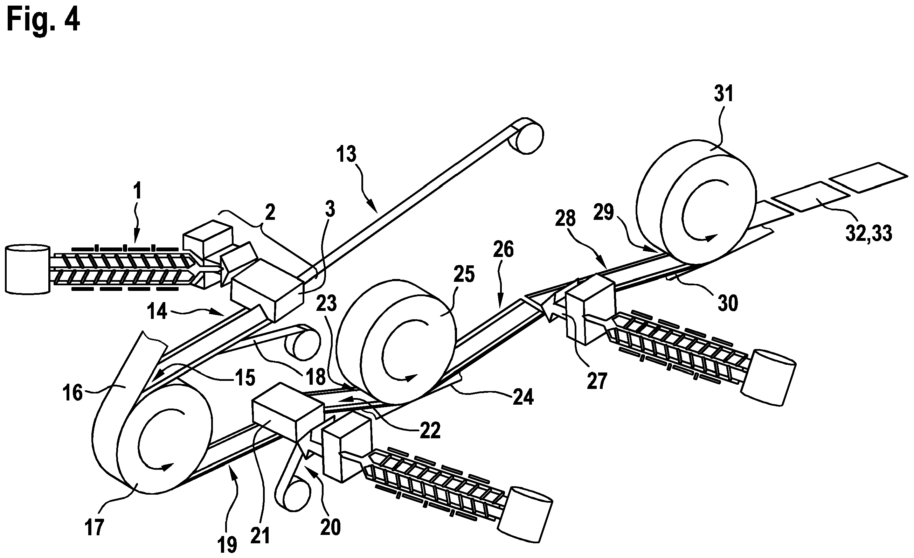

Fig. 4 zeigt in Form einer Prinzipskizze ein weiteres erfindungsgemäßes Herstellungsverfahren, nämlich ein mehrstufiges Extrusions- und Formverfahren, bei dem zunächst ein Polymer 1, ebenfalls ein thermoplastisches Polyurethan plastifiziert und durch eine den Austrittquerschnitt aus einem Extruderkopf 2 bildende Extruderdüse 3 gefördert wird, wobei ein flacher Streifen extrudierten Materials geformt wird.

Nun wird ein Leiter 13, hier ausgebildet als flacher Folienleiter, rückseitig der ersten Extruderdüse 3 so zugeführt, dass abhängig von der Vorschubgeschwindigkeit des Leiters 13 und der Austrittsgeschwindigkeit und -menge des aus der Extruderdüse austretenden plastifizierten Polymers 1 der Leiter 13 so aufgebracht wird, dass er in einer Oberfläche des Materialstreifens nur teilweise in das extrudierte Polymer 1 eingebettet ist und auf seiner Oberseite von Polymer frei bleibt.

Die so entstandene erste Verbundstruktur 14 aus extrudiertem, noch zähflüssigem Polymer mit eingebettetem ersten Leiter 13 wird in einen Formspalt 15 zwischen einem Druckband 16 und einem Formrad 17 eingeführt, wobei vor Eintritt in den Formspalt 15 mindestens ein zweiter Leiter 18, vorzugsweise der stromführende Leiter, der Verbundstruktur 14 zugeführt und mit letzterer im Formspalt 15 zu einem Teilrohling 19 verbunden wird, wobei erster Leiter 13 und zweiter Leiter 18 durch das Polymer 1 voneinander isoliert sind. Nach Durchlaufen des Formspaltes 15 zwischen Druckband 16 und Formrad 17 wird der so entstandene erste Teilrohling 19 und ein dritter Leiter 20, hier der Nullleiter, rückseitig einer zweiten Extruderdüse 21 für plastifiziertes Polymer zugeführt, wobei das plastifizierte Polymer 1 den dritten Leiter 20 vollständig umhüllt und elektrisch von allen übrigen Leitern isoliert.

Die so entstandene zweite Verbundstruktur 22 aus extrudiertem, noch zähflüssigem Polymer mit den eingebetteten Leitern 13, 18 und 20 wird in einen zweiten Formspalt 23 zwischen einem Druckband 24 und einem zweiten Formrad 25 eingeführt,
nach Durchlaufen des zweiten Formspalts 23 zwischen Druckband 24 und zweitem Formrad 25 wird der so entstandene zweite Teilrohling 26 rückseitig einer dritten Extruderdüse 27 für plastifiziertes Polymer zugeführt, wobei das dort plastifizierte Polymer auf die dem ersten Leiter 13 gegenüberliegende Seite des zweiten Teilrohlings 26 aufgebracht wird.

Die so entstandene dritte Verbundstruktur 28 aus extrudiertem, noch zähflüssigem Polymer mit allen eingebetteten Leitern wird in einen dritten Formspalt 29 zwischen einem Druckband 30 und einem mit einem Außenprofil versehenen dritten Formrad 31 zum fertigen Ladeschienenrohling eingeformt. Nach Durchlaufen des dritten Formspalts 29 wird der endlose Ladeschienenrohling 32 in einzelne Ladeschienenlängen 33 geschnitten.

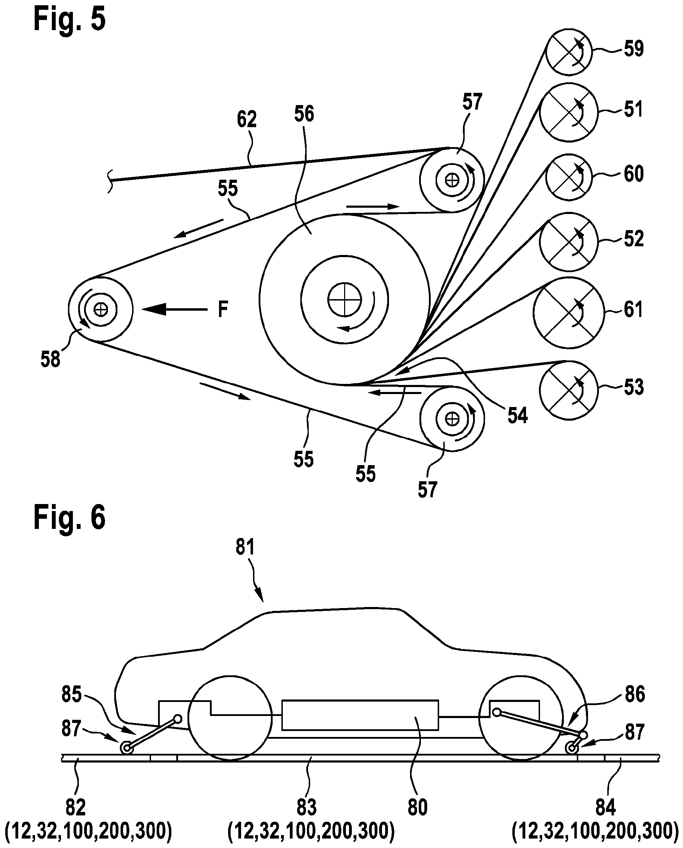

Fig. 5 zeigt in Form einer Prinzipskizze noch ein weiteres Ausführungsbeispiel eines erfindungsgemäßen Herstellungsverfahrens, bei dem mehrere kalandrierte und konfektionierte Bahnen 51, 52, 53 eines mindestens noch teilweise plastifizierten Polymers sowie von Trommeln abgewickelte drahtförmige Leiter 59, 60 bzw. flache Folienleiter 61 in den Formspalt 54 zwischen einem Band 55 und einem zylindrischen, heizbaren, profilierten Formrad 56 einer Rotationsvulkanisationseinrichtung (im Fachjargon auch kurz AUMA genannt [Aufbaumaschine]) eingeführt werden, wobei Temperaturführung des als Heiztrommel ausgebildeten Formrades 56 und der durch Spannrollen 57, 58 erzeugte Anlagedruck des Bandes 55 so ausgebildet sind, das bei mindestens teilweiser Vulkanisation der Bahnen ein endloses Verbundmaterial als Ladeschienenrohling 62 geformt wird. Gegebenenfalls kann bei diesem Prozess auch ein Trägermaterial oder Trennmaterial mit in den Formspalt einlaufen, beispielsweise wenn plastifiziertes Polymermaterial allein nicht stabil genug ist oder wenn man nachträglich für den Transport ein Trennmaterial zwischen den einzelnen Schichten braucht, damit kein vorzeitiges Verkleben der einzelnen Schichten stattfindet.

In diesem Beispiel werden also kalandrierte Polymerbahnen als Bahnmaterial und Leitermaterialien als Draht und Bahnmaterial jeweils separat in den Formspalt eingeführt.

Das Einformen im Formspalt der Rotationsvulkanisationseinrichtung erfolgt so, dass das mindestens noch teilweise plastifizierte Polymer die Leiter umhüllt und elektrisch voneinander isoliert, wobei die Polymerbahnen mit bereits eingebetteten Leitern oder die Polymerbahnen und die Leitermaterialien am Einlauf in den Formspalt in einer ihrer in der Ladeschiene entsprechenden Anordnung und Lage positioniert und zugeführt werden.

Nach Durchlaufen des Formspaltes wird der endlose und als Verbundbauteil ausgebildete Ladeschienenrohling 62 in einzelne Ladeschienenlängen geschnitten.

Es können natürlich auch kalandrierte oder konfektionierte Polymerbahnen mit bereits eingebetteten Leitern in den Formspalt so eingeführt und so geformt werden, dass alle Leiter von Polymer umhüllt und elektrisch voneinander isoliert sind. Dadurch reduziert sich die Anzahl der zugeführten einzelnen Materialien und gegebenenfalls auch die Abmessungen der entsprechenden Maschinen.

Letztlich erlaubt Fig. 6 prinzipiell einen Blick auf das gesamte System zum Laden eines Energiespeichers 80 eines Elektrofahrzeugs 81 während der Fahrt. Das System weist dabei mehrere parallel zur Fahrtrichtung des Elektrofahrzeugs in einer Reihe fortlaufend auf dem oder am Fahrweg angeordnete Energieübertragungseinrichtungen 82, 83, 84 auf und eine stationär im Fahrzeug angeordnete Energieaufnahmeeinrichtung 85, 86, wobei die jeweiligen Energieübertragungseinrichtungen untereinander und in Bezug auf die Energieaufnahmeeinrichtung so angeordnet und so schaltbar oder verbindbar sind, dass die Energieübertragungseinrichtungen zur Ladung des Energiespeichers 80 sukzessive in Wechselwirkung mit den Energieaufnahmeeinrichtungen 85, 86 treten.

Die Energieübertragungseinrichtungen sind als längs des Fahrwegs vorgesehene, aneinander anschließende, miteinander geregelt elektrisch verbindbare und voneinander isolierte Ladeschienen 12, 32 bzw.100, 200, 300 aus elastomerem Material ausgebildet, die einen oder mehrere im elastomeren Material mindestens teilweise eingebettete, in dieser Fig. aber nicht näher dargestellte elektrische Leiter aufweisen.

Die Energieaufnahmeeinrichtung 85, 86 weisen hier betätigbare und an die Ladeschienen anstellbare Rollen 87 zur konduktiven Kontaktierungen auf.

### Bezugszeichenliste

- 1: Polymer, thermoplastisches Polyurethan
- 2: Extruderkopf
- 3: Extruderdüse
- 4: Leiter, stromführender Leiter
- 5: Nullleiter
- 6: Leiter, dritter Leiter (schaltbarer Leiter)
- 7: Verbundstruktur
- 8: Formspalt
- 9: Druckband
- 10: Formrad
- 11: Ladeschienenrohling
- 12: Ladeschiene, einzelne Ladeschienenlänge
- 13: Leiter, flacher Folienleiter
- 14: erste Verbundstruktur
- 15: Formspalt, erster Formspalt
- 16: Druckband
- 17: Formrad, erstes Formrad
- 18: Leiter, zweiter Leiter
- 19: erster Teilrohling
- 20: Leiter, dritter Leiter (Nullleiter)
- 21: zweite Extruderdüse
- 22: zweite Verbundstruktur
- 23: Formspalt, zweiter Formspalt
- 24: Druckband
- 25: Formrad, zweites Formrad
- 26: zweiter Teilrohling
- 27: dritteExtruderdüse
- 28: dritte Verbundstruktur
- 29: Formspalt, dritter Formspalt
- 30: Druckband
- 31: Formrad, drittes Formrad
- 32: Ladeschienenrohling
- 33: Ladeschiene, einzelne Ladeschienenlänge

- 51: kalandrierte Polymerbahn
- 52: kalandrierte Polymerbahn
- 53: kalandrierte Polymerbahn
- 54: Formspalt einer Rotationsvulkanisationseinrichtung
- 55: Druckband
- 56: Formrad, Heiztrommel
- 57: Spannrolle
- 58: Spannrolle
- 59: Leiter, Leiterdraht
- 60: Leiter, Leiterdraht
- 61: Leiter, flacher Folienleiter
- 62: Ladeschienenrohling, Verbundbauteil

- 80: Energiespeicher
- 81: Elektrofahrzeug
- 82: Ladeschienen, Energieübertragungseinrichtungen
- 83: Ladeschienen, Energieübertragungseinrichtungen
- 84: Ladeschienen, Energieübertragungseinrichtungen
- 85: Energieaufnahmeeinrichtung
- 86: Energieaufnahmeeinrichtung
- 87: anstellbare Rollen

- 100: Ladeschiene
- 101: stromführender Leiter, flacher Folienleiter
- 102: Nullleiter, flacher Folienleiter
- 103: schaltbarer Leiter, flacher Folienleiter
- 104: Unterseite
- 105: Ausnehmungen

- 200: Ladeschiene
- 201: stromführender Leiter
- 202: Nullleiter
- 203: schaltbarer Leiter, flacher Folienleiter
- 204: Seitenbereich

- 300: Ladeschiene
- 301: stromführender Leiter
- 302: Nullleiter
- 303: schaltbarer Leiter, Leiterbündel
- 304: Seitenbereich

## Patentansprüche

1. System zum Laden eines Energiespeichers (80) eines Elektrofahrzeugs (81) während der Fahrt, aufweisend mehrere längs zur Fahrtrichtung des Elektrofahrzeugs in einer Reihe fortlaufend auf dem oder am Fahrweg angeordnete Energieübertragungseinrichtungen (12, 32, 100, 200, 300) und mindestens eine stationär im Fahrzeug angeordnete Energieaufnahmeeinrichtung (85, 86), wobei die jeweiligen Energieübertragungseinrichtungen (12, 32, 100, 200, 300) untereinander und in Bezug auf die Energieaufnahmeeinrichtung so angeordnet und so schaltbar, betätigbar oder verbindbar sind, dass die Energieübertragungseinrichtungen (12, 32, 100, 200, 300) zur Ladung des Energiespeichers (80) vorzugsweise sukzessive in Wechselwirkung mit der Energieaufnahmeeinrichtung (85, 86) treten, **dadurch gekennzeichnet, dass** die Energieübertragungseinrichtung als längs des Fahrwegs vorgesehene, aneinander anschließende, miteinander geregelt elektrisch verbindbare Ladeschienen (12, 32, 100, 200, 300) aus polymerem Werkstoff, vorzugsweise aus elastomerem Material ausgebildet sind, die einen oder mehrere im polymeren Werkstoff mindestens teilweise eingebettete elektrische Leiter (4, 5, 6, 13, 18, 20, 101, 102, 103, 201, 202, 203, 301, 302, 303) aufweisen.

2. System nach Anspruch 1, bei dem die Energieübertragungseinrichtung mindestens teilweise im polymeren Werkstoff eingebettete konduktive Leiter (101, 201, 301) und die Energieaufnahmeeinrichtung mit den konduktiven Leitern zusammenwirkende Stromabnehmer (85, 86, 87) aufweisen.

3. System nach Anspruch 1, bei dem die Energieübertragungseinrichtung eine ein Magnetfeld erzeugende erste Spule und die Energieaufnahmeeinrichtung eine zweite induktive Koppelspule zur ersten Spule aufweisen.

4. Ladeschiene eines Systems zum Laden eines Energiespeichers eines Elektrofahrzeugs nach einem der Ansprüche 1 bis 3 aus einem aus einem polymeren Werkstoff, vorzugsweise aus einem Elastomer, **dadurch gekennzeichnet, dass** in der Ladeschiene mindestens drei durch den polymeren Werkstoff voneinander isolierte elektrische Leiter vorgesehen sind, von denen mindestens einer als stromführender Leiter (101, 201, 301), mindestens ein zweiter Leiter als Nullleiter (102, 202, 302) und mindestens ein separater dritter, vorzugsweise schaltbarer Leiter vorgesehen (103, 203, 303) ist.

5. Ladeschiene aus polymerem Werkstoff nach Anspruch 4, bei der der stromführende Leiter (201, 301) und der Nullleiter (202, 302) in Bezug auf den Querschnitt der Ladeschiene in deren Seitenbereichen (303, 304) und der schaltbare Leiter (203, 303) zwischen stromführendem Leiter und Nullleiter angeordnet sind.

6. Ladeschiene aus polymerem Werkstoff nach Anspruch 4, bei der mindestens zwei Leiter (101, 102, 103) in Bezug auf den Querschnitt der Ladeschiene übereinander angeordnet sind.

7. Ladeschiene aus polymerem Werkstoff nach einem der Ansprüche 4 bis 6 mit einem flachen, bandförmigen Querschnitt, wobei die Höhe der Ladeschiene kleiner als 15% ihrer Breite ist, vorzugsweise kleiner als 10% ihrer Breite.

8. Ladeschiene aus polymerem Werkstoff (100, 200, 300) nach einem der Ansprüche 4 bis 7 mit einem flachen, trapezförmigen Querschnitt, wobei der schalbare Leiter im Bereich der kürzeren der beiden parallelen Seiten angeordnet und die längere der beiden parallelen Seiten dem Fahrweg zugewandt ist, wobei die Höhe des Trapezes kleiner als 10% der Länge der kürzeren der beiden parallelen Seiten ist.

9. Ladeschiene aus polymerem Werkstoff (100, 200, 300) nach einem der Ansprüche 4 bis 8, bei der der schaltbare Leiter an einer Oberfläche der Ladeschiene nur teilweise und so eingebettet ist, dass der schaltbare Leiter konduktiv kontaktierbar ist, vorzugsweise durch einen auf der Ladeschiene gleitenden oder rollenden Stromabnehmer.

10. Ladeschiene aus polymerem Werkstoff (100, 200, 300) nach einem der Ansprüche 4 bis 9, bei der die Unterseite oder die längere der beiden parallelen Seiten dem Fahrweg zugewandte Ausnehmungen oder Kanäle aufweist.

11. Ladeschiene aus polymerem Werkstoff nach einem der Ansprüche 4 bis 10, bei der innerhalb der Matrix aus elastomerem Material ein weiteres konduktives Material eingebettet wird, dass von den übrigen Leitern elektrisch isoliert ist.

12. Verfahren zur Herstellung einer Ladeschiene nach einem der Ansprüche 4 bis 11 durch ein **Extrusions- und Formverfahren,** bei dem ein polymerer Werkstoff (1), vorzugsweise ein Elastomer oder ein thermoplastisches Polyurethan in einem Extrusionsprozess ggf. unter zusätzlicher Wärmezufuhr plastifiziert und durch eine den Austrittquerschnitt aus einem Extruderkopf (2) bildende Extruderdüse (3) gefördert wird, wobei ein flacher Streifen extrudierten Materials geformt wird, **gekennzeichnet durch** die folgenden weiteren Verfahrensschritte:
a) mindestens ein Stromleiter (4) und mindestens ein Nullleiter (5) werden über Abstandhalter voneinander beabstandet rückseitig der Extruderdüse (3) so zugeführt, dass abhängig von der Vorschubgeschwindigkeit der Leiter (4, 5) und der Austrittsgeschwindigkeit und -menge des aus der Extruderdüse austretenden plastifizierten Polymers (1) die mindestens zwei Leiter in das extrudierte, noch warme relativ zähflüssige Material eingebunden, vollständig umhüllt und damit elektrisch isoliert werden,
b) auf die so in Form eines flachen Materialstreifens entstandene Verbundstruktur (7) aus extrudiertem Polymer mit eingebetteten Leitern wird mindestens ein separater dritter konduktiver Leiter (6) so aufgebracht, dass der dritte Leiter von den ersten und dem zweiten Leiter elektrisch isoliert ist und an einer Oberfläche des Materialstreifens nur teilweise eingebettet ist,
c) die so entstandene Verbundstruktur (7) aus extrudiertem, noch zähflüssigem Polymer mit eingebetteten Leitern wird in einem Formspalt (8) zwischen einem Druckband (9) und einem mit einem Außenprofil versehenen Formrad (10) unter Wärmeentzug zum fertigen Ladeschienenrohling (11) eingeformt und vulkanisiert,
d) nach Durchlaufen des Formspaltes zwischen Druckband und Formrad wird der endlose Ladeschienenrohling (11) in einzelne Ladeschienenlängen (12) geschnitten.

13. Verfahren zur Herstellung einer Ladeschiene nach Anspruch 12, wobei im Schritt d) nach Durchlaufen des Formspaltes zwischen Druckband und Formrad und vor dem Schnitt der endlose Ladeschienenrohling (11) einer weiteren Wärmebehandlung zur Vulkanisation oder Vernetzung des Polymers zugeführt wird.

14. Verfahren zur Herstellung einer Ladeschiene nach Anspruch 12 oder 13, wobei im Schritt b) auf die Verbundstruktur (7) aus flachem Materialstreifen extrudierten Polymers mit eingebetteten Leitern ein weiteres konduktives Material in die Polymermatrix eingebettet wird, wobei das weitere konduktive Material vorzugsweise erwärmt wird.

15. Verfahren zur Herstellung einer Ladeschiene nach einem der Ansprüche 12 bis 14, bei dem im Schritt a) und/oder b) mindestens zwei der konduktiven Leiter (101, 102, 103) übereinander geführt und übereinander beabstandet in die Verbundstruktur aus extrudiertem Polymer eingebettet werden.

16. Verfahren zur Herstellung einer Ladeschiene nach einem der Ansprüche 4 bis 11 durch ein **mehrstufiges Extrusions- und Formverfahren,** bei dem ein polymerer Werkstoff (1), vorzugsweise ein Elastomer oder ein thermoplastisches Polyurethan in Extrusionsprozessen ggf. unter zusätzlicher Wärmezufuhr plastifiziert und durch eine den Austrittquerschnitt aus einem Extruderkopf (2) bildende Extruderdüse (3) gefördert wird, wobei ein flacher Streifen extrudierten Materials geformt wird, **gekennzeichnet durch** die folgenden weiteren Verfahrensschritte:
a) mindestens ein erster Leiter (13), vorzugsweise der schaltbare, separate Leiter wird rückseitig einer ersten Extruderdüse (3) so zugeführt, dass abhängig von der Vorschubgeschwindigkeit des Leiters und der Austrittsgeschwindigkeit und -menge des aus der Extruderdüse austretenden plastifizierten polymeren Werkstoffs der Leiter (13) so aufgebracht wird, dass er in einer Oberfläche des Materialstreifens nur teilweise in das extrudierte Polymer (1) eingebettet ist,
b) die so entstandene erste Verbundstruktur (14) aus extrudiertem, noch zähflüssigem Polymer mit eingebettetem ersten Leiter (13) wird in einen ersten Formspalt (15) zwischen einem Druckband (16) und einem ersten Formrad (17) eingeführt, wobei vor Eintritt in den Formspalt mindestens ein zweiter Leiter (18), vorzugsweise der stromführende Leiter, der Verbundstruktur (14) zugeführt und mit letzterer im Formspalt zu einem ersten Teilrohling (19) verbunden wird, wobei erster Leiter (13) und zweiter Leiter (18) durch das Polymer (1) voneinander isoliert sind,
c) nach Durchlaufen des ersten Formspalts (15) zwischen Druckband und Formrad wird der so entstandene erste Teilrohling (19) und mindestens ein dritter Leiter (20), vorzugsweise der Nullleiter, rückseitig einer zweiten Extruderdüse (21) für plastifiziertes Polymer zugeführt, wobei das plastifizierte Polymer den dritten Leiter (20) vollständig umhüllt und elektrisch von allen übrigen Leitern isoliert,
d) die so entstandene zweite Verbundstruktur (22) aus extrudiertem, noch zähflüssigem Polymer mit allen eingebetteten Leitern wird in einen zweiten Formspalt (23) zwischen einem Druckband (24) und einem zweiten Formrad (25) eingeführt,
e) nach Durchlaufen des zweiten Formspalts (23) zwischen Druckband und zweitem Formrad wird der so entstandene zweite Teilrohling (26) rückseitig einer dritten Extruderdüse (27) für plastifiziertes Polymer zugeführt, wobei das plastifizierte Polymer auf die dem ersten Leiter gegenüberliegende Seite des zweiten Teilrohlings (26) aufgebracht wird,
f) die so entstandene dritte Verbundstruktur aus extrudiertem, noch zähflüssigem Polymer mit allen eingebetteten Leitern wird in einen dritten Formspalt (29) zwischen einem Druckband (30) und einem mit einem Außenprofil versehenen dritten Formrad (31) zum fertigen Ladeschienenrohling eingeführt und eingeformt,
g) nach Durchlaufen des dritten Formspaltes wird der endlose Ladeschienenrohling (32) in einzelne Ladeschienenlängen (31) geschnitten.

17. Verfahren zur Herstellung einer Ladeschiene nach Anspruch 16, wobei in einem der Schritte a) bis f) auf die jeweilige Verbundstruktur ein weiteres konduktives Material in die Polymermatrix eingebettet wird, wobei das weitere konduktive Material vorzugsweise erwärmt wird.

18. Verfahren zur Herstellung einer Ladeschiene nach einem der Ansprüche 4 bis 11, bei dem mehrere kalandrierte oder konfektionierte Bahnen (51, 52, 53) eines mindestens noch teilweise plastifizierten polymeren Werkstoffs, vorzugsweise eines Elastomers oder eines thermoplastischen Polyurethans in den Formspalt (54) zwischen einem Band (55) und einem zylindrischen, heizbaren, vorzugsweise profilierten Formrad (56) einer **Rotationsvulkanisationseinrichtung** eingeführt werden, wobei Temperaturführung des Formrades und Anlagedruck des Bandes so ausgebildet sind, das bei mindestens teilweiser Vulkanisation der Bahnen ein endloses Verbundmaterial als Ladeschienenrohling (62) geformt wird, **gekennzeichnet dadurch, dass**
a) entweder kalandrierte oder konfektionierte Polymerbahnen mit bereits eingebetteten Leitern in den Formspalt so eingeführt werden, dass das mindestens noch teilweise plastifizierte Polymer die Leiter umhüllt und elektrisch voneinander isoliert,
b) oder kalandrierte oder konfektionierte Polymerbahnen (51, 52, 53) und Leitermaterialien (59, 60, 61) als Strang, Draht, Litzen oder Bahnmaterial jeweils separat in den Formspalt (54) so eingeführt werden, dass das mindestens noch teilweise plastifizierte Polymer die Leiter (59, 60, 61) umhüllt und elektrisch voneinander isoliert, wobei
c) die Polymerbahnen mit bereits eingebetteten Leitern oder die Polymerbahnen und die Leitermaterialien am Einlauf in den Formspalt in einer ihrer in der Ladeschiene entsprechenden Anordnung und Lage positioniert und zugeführt werden,
wobei nach Durchlaufen des Formspaltes der endlose Ladeschienenrohling in einzelne Ladeschienenlängen geschnitten wird.

19. Verfahren zur Herstellung einer Ladeschiene nach einem der Ansprüche 4 bis 11, bei dem mehrere kalandrierte und im Wesentlichen in der Länge einer Ladeschiene konfektionierte Bahnen eines mindestens teilweise plastifizierten polymeren Werkstoffs, vorzugsweise eines Elastomer oder ein thermoplastischen Polyurethans in eine als Vulkanisationsform ausgebildete **Vulkanisationspresse** eingelegt werden, wobei Temperaturführung des Vulkanisationspresse und Pressendruck so ausgebildet sind, dass bei der Vulkanisation der Bahnen ein die Ladeschiene bildendes Verbundmaterial geformt wird, **gekennzeichnet dadurch, dass**
a) entweder kalandrierte oder konfektionierte Polymerbahnen mit bereits eingebetteten Leitern in die Vulkanisationspresse so eingelegt werden, dass das mindestens noch teilweise plastifizierte Polymer die Leiter vollständig umhüllt und elektrisch voneinander isoliert,
b) oder kalandrierte oder konfektionierte Polymerbahnen und Leitermaterialien als Strang, Draht, Litzen oder Bahnmaterial separat in die Vulkanisationspresse so eingelegt werden, dass das mindestens noch teilweise plastifizierte Polymer die Leiter umhüllt und elektrisch voneinander isoliert, wobei
c) die Vulkanisationsform aus mehreren vorzugsweise mit eine Innenprofilierung versehenen Formteilen besteht, und wobei
d) die aus dem Verbundmaterial geformten Ladeschienen letztlich getrimmt und/oder einer Endenbearbeitung zugeführt werden.

20. Verfahren zur Herstellung einer Ladeschiene nach einem der Ansprüche 4 bis 11, **gekennzeichnet dadurch, dass** mehrere Leitermaterialien als Strang, Draht, Litzen oder Bahnmaterial in eine vorzugsweise heizbare **Spritzgussform oder Spritzgussvorrichtung** eingelegt oder eingeführt werden, wonach die Leitermaterialien mit einem plastifizierten Polymer, vorzugsweise einem Elastomer oder einem thermoplastischen Polyurethan so umspritzt werden, dass das Polymer die Leiter umhüllt und elektrisch voneinander isoliert, wobei das Polymer anschließend in der Spritzgussform oder -vorrichtung vernetzt oder vulkanisiert wird und Temperaturführung und Druck in der Spritzgussform oder -vorrichtung so ausgebildet sind, dass ein Verbundmaterial geformt wird, welches den Ladeschienenrohling oder die Ladeschiene bildet und letztlich geschnitten, getrimmt und/oder einer Endenbearbeitung zugeführt wird.
